# FASCICULE DE BREVET EUROPEEN

(11) **EP 1 675 763 B1**
(45) Date de publication et mention de la délivrance du brevet: **13.06.2007**
(21) Numéro de dépôt: 04786370.9
(22) Date de dépôt: 31.08.2004
(51) Int. Cl.: B62D 3/12, F16B 21/18, F16C 35/07

(54) **DISPOSITIF DE MONTAGE DE LA LIGNE PIGNON DANS UN CARTER DE DIRECTION A CREMAILLERE DE VEHICULE AUTOMOBILE**
VORRICHTUNG ZUR MONTAGE EINES RITZELSTRANGS IN EINEM ZAHNSTANGEN-LENKGETRIEBEGEHÄUSE FÜR EIN KRAFTFAHRZEUG
DEVICE FOR ASSEMBLING A PINION LINE IN A RACK-AND-GEAR STEERING CRANKCASE FOR A MOTOR VEHICLE

(30) Priorité: 15.10.2003 FR 0312037
(43) Date de publication de la demande: 05.07.2006
(73) Titulaire: Koyo Steering Europe (K.S.E.), 69540 Irigny (FR)
(72) Inventeur: LAGNIEN, Olivier, F-69480 Morance (FR)
(74) Mandataire: Bratel, Gérard
(86) Numéro de dépôt international: PCT/FR2004/002215
(87) Numéro de publication internationale: WO 2005/047078

(56) Documents cités:
- GB-A- 339 455
- US-A- 2 964 967
- US-A- 3 029 617

## Description

La présente invention concerne, de façon générale, les directions à crémaillère des véhicules automobiles. Plus particulièrement, cette invention s'intéresse à un dispsoitif de montage de la "ligne pignon", c'est-à-dire de la partie de carter qui supporte le pignon de direction et son arbre, ainsi que les roulements ou paliers par l'intermédiaire desquels le pignon est monté tournant dans le carter. Le document US-A-2 964 967 divulgue tel dispositif selon le préambule de la revendication 1.

Dans une direction à crémaillère, un pignon de direction est lié en rotation avec la colonne de direction, manoeuvrée à l'aide du volant de conduite du véhicule automobile, le pignon de direction venant en prise avec une crémaillère qui est montée coulissante dans le carter de direction. Les deux extrémités de la crémaillère, extérieures à ce carter, sont accouplées à des biellettes de direction associées respectivement aux roues directrices droite et gauche du véhicule. Ainsi, la rotation du volant dans un sens ou dans l'autre, donc la rotation correspondante du pignon de direction, est convertie en une translation correspondante de la crémaillère dans le carter. La translation de la crémaillère provoque elle-même, par l'intermédiaire des biellettes de direction, l'orientation des roues directrices du véhicule, pour un braquage à droite ou à gauche.

Le pignon de direction possède habituellement un arbre, qui sort du carter de direction et qui est raccordé à la colonne de direction, l'ensemble constitué par ce pignon et par son arbre étant monté tournant dans le carter par l'intermédiaire d'une part d'un palier d'extrémité, notamment constitué par une douille à aiguilles, et d'autre part, d'un roulement à billes, un joint annulaire assurant l'étanchéité autour de l'arbre du pignon, vers l'endroit où cet arbre sort du carter.

A titre d'exemples de cet état de la technique, il est ici fait référence aux documents EP 1 059 219 A1 et EP 1 093 991 A1.

Actuellement, dans ce genre de réalisations, le roulement est maintenu au fond de son logement par un anneau élastique fendu, du genre "CIRCLIPS", qui nécessite l'usinage, à l'intérieur du carter, d'une gorge annulaire prévue pour recevoir ledit anneau élastique. Le joint d'étanchéité doit, quant à lui, être bridé sur le carter. Ainsi, le montage complet de la ligne pignon nécessite d'une part un usinage intérieur du carter, pour le maintien du roulement, et d'autre part une fixation séparée du joint d'étanchéité. Les opérations de montage de la ligne pignon restent donc, globalement, relativement complexes et coûteuses à l'heure actuelle.

La présente invention vise à éviter ces inconvénients, et elle a donc pour but de simplifier le montage de la ligne pignon et de le rendre ainsi plus économique, tout en assurant convenablement les fonctions de maintien du roulement et d'étanchéité.

A cet effet, l'invention a pour objet un dispositif de montage de la ligne pignon dans un carter de direction à crémaillère de véhicule automobile, la ligne pignon comprenant une partie tubulaire de carter entourant coaxialement l'ensemble constitué par le pignon de direction et par son arbre, ainsi qu'un palier d'extrémité et un roulement pour le montage tournant de cet ensemble, un organe d'étanchéité étant placé vers la sortie de l'arbre du pignon, ce dispositif de montage étant caractérisé essentiellement en ce que l'organe d'étanchéité est constitué par une armature rigide supportant une bague élastiquement déformable, et en ce qu'une pièce déformable de façon permanente est mise en place sur la partie tubulaire du carter, cette pièce étant déformée vers l'intérieur de ladite partie tubulaire pour arrêter axialement l'armature de l'organe d'étanchéité, laquelle armature maintiendra elle-même en place le roulement.

Ainsi, l'idée inventive consiste à prévoir un organe d'étanchéité avec bague déformable supportée par une armature rigide, en particulier une armature métallique, qui forme une entretoise entre le roulement, placé au fond de la partie tubulaire du carter, et une pièce déformable retenue sur la même partie tubulaire de carter, plus vers l'extérieur de cette partie. Le roulement est ainsi maintenu en place dans le carter sans nécessité d'un usinage intérieur de ce carter, et en particulier on supprime ici l'opération d'usinage d'une gorge intérieure destinée à recevoir un anneau élastique fendu, du genre "CIRCLIPS". De plus, une seule opération, à savoir la déformation d'une pièce portée par la partie tubulaire du carter, assure simultanément la retenue de l'organe d'étanchéité, qui assure l'étanchéité du système vis-à-vis de l'environnement extérieur, et le maintien en place (par l'intermédiaire de l'armature rigide de cet organe d'étanchéité) du roulement. On simplifie ainsi considérablement les opérations de montage, et aussi les formes de la partie tubulaire du carter, coaxiale au pignon et à son arbre, cette partie tubulaire pouvant être obtenue par un simple tube étiré soudé, ou par extrusion, ou encore par moulage sous pression, pourvu que ladite partie du carter soit en forme de tube.

Dans un mode de réalisation du dispositif, objet de l'invention, l'armature de l'organe d'étanchéité est constituée par une pièce rigide en forme générale de manchon, tandis que la bague élastiquement déformable, supportée par l'armature, est liée par surmoulage à cette armature. Avantageusement la bague élastiquement déformable comporte, extérieurement, une partie annulaire massive assurant une étanchéité statique sur la paroi interne de la partie tubulaire, et, intérieurement, au moins une lèvre annulaire coopérant avec l'arbre du pignon pour assurer une étanchéité dynamique.

La pièce déformable de façon permanente, mise en place sur la partie tubulaire du carter, est de préférence une pièce métallique de forme initialement circulaire, mise en place autour de ladite partie tubulaire puis resserrée, dans au moins deux zones, au travers d'ajours correspondants ménagés dans cette partie tubulaire, de manière à s'engager à l'intérieur de la partie tubulaire du carter, et à former ainsi des moyens d'arrêt coopérant avec l'armature de l'organe d'étanchéité. Dans un mode de réalisation simple, la pièce déformable, intialement circulaire, est déformée par resserrement de deux zones diamétralement opposées, engagées respectivement au travers de deux ajours en forme de fentes ou de trous oblongs, diamétralement opposés, ménagés dans la partie tubulaire du carter. La pièce déformable utilisée est notamment une pièce en acier, à laquelle il est facile de conférer une déformation permanente, par poinçonnage ou forgeage.

L'invention sera mieux comprise à l'aide de la description qui suit, en référence au dessin annexé schématique représentant, à titre d'exemple, une forme d'exécution de ce dispositif de montage de la ligne pignon dans un carter de direction à crémaillère de véhicule automobile.

Figure 1 est une vue en coupe transversale d'une direction à crémaillère, la coupe passant par l'axe de la ligne pignon ;

Figure 2 est une coupe suivant la ligne II-II de figure 1, montrant un détail du dispositif de montage objet de l'invention.

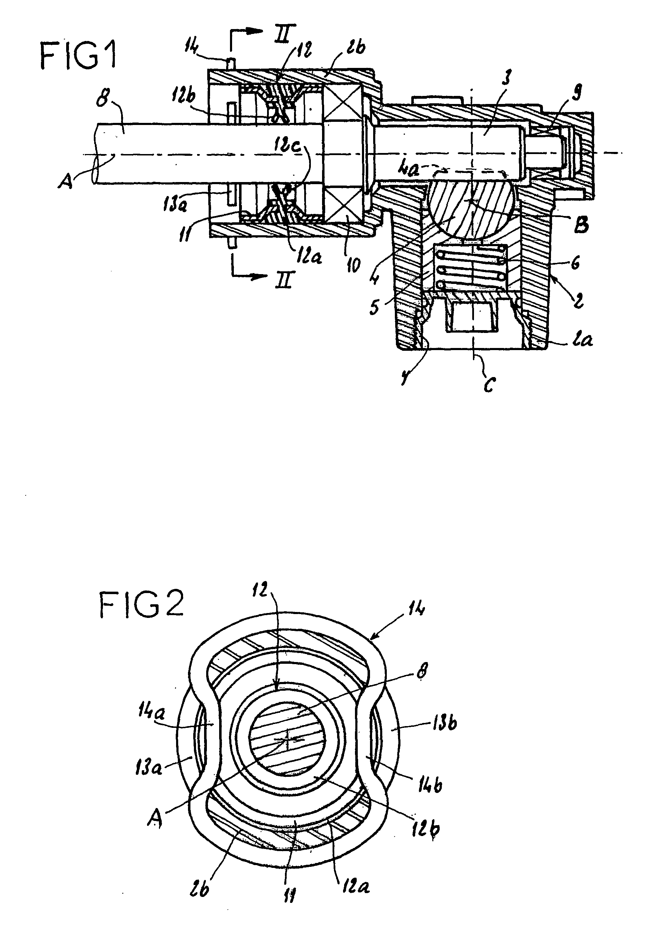

La figure 1 représente partiellement une direction à crémaillère de véhicule automobile, et elle en montre plus particulièrement le carter 2 logeant le pignon de direction 3 et la crémaillère 4, dont la denture 4a vient en prise avec le pignon 3, lui-même accouplé à la colonne de direction (non représentée). L'axe de rotation A du pignon 3 s'étend suivant une direction qui forme un angle avec l'axe longitudinal de coulissement B de la crémaillère 4.

Le carter de direction 2 possède une première partie tubulaire en saillie 2a, ouverte vers l'extérieur, dont l'axe central C s'étend orthogonalement à l'axe de rotation A du pignon 3 et à l'axe longitudinal de coulissement B de la crémaillère 3. A l'intérieur de la partie tubulaire 2a est monté coulissant un poussoir 5, qui est guidé en coulissement suivant l'axe C de cette partie tubulaire 2a. Une extrémité du poussoir 5 se présente comme une face de profil général concave, adaptée au dos de la crémaillère 4. Un ressort hélicoïdal 6, appuyé sur un bouchon ou sur une vis de réglage 7 obturant la partie tubulaire 2a, exerce une poussée axiale sur la poussoir 5, de manière à appuyer la face concave de ce dernier contre le dos de la crémaillère 4. Ce système de poussoir, qui ne fait pas l'objet de la présente invention, peut être remplacé par toute autre réalisation équivalente.

Dans la suite, on considère plus particulièrement le montage de l'ensemble rigide constitué par le pignon de direction 3 proprement dit, et par l'arbre 8 de ce pignon 3, qui le prolonge vers l'extérieur, cet ensemble étant disposé suivant l'axe A précité, et l'arbre 8 constituant l'entrée de mouvement depuis la colonne de direction.

Le carter de direction possède une seconde partie tubulaire en saillie 2b, qui entoure coaxialement l'arbre 8 du pignon 3.

L'extrémité du pignon 3 proprement dit, à l'opposé de l'arbre 8, est montée tournante dans le carter de direction 2 par l'intermédiaire d'un palier 9, notamment constitué par une douille à aiguilles. L'ensemble considéré est aussi monté tournant par l'intermédiaire d'un roulement à billes 10 placé au fond de la partie tubulaire 2b du carter 2, le roulement 10 prenant ainsi place à la jonction du pignon 3 et de son arbre 8.

La partie tubulaire 2b du carter 2 reçoit, en avant du roulement 10, un ensemble annulaire composé d'une armature métallique 11 en forme générale de manchon, et d'une bague 12 en élastomère ou en caoutchouc, ces deux éléments étant réunis en particulier par surmoulage. L'armature métallique 11 est appuyée, d'un côté, contre le roulement 10 pour le maintenir. La bague 12 comporte, extérieurement, une partie annulaire massive 12a assurant une étanchéité statique sur la paroi interne de la partie tubulaire 2b du carter 2. Cette bague 12 comporte aussi, intérieurement, deux lèvres annulaires 12b et 12c qui assurent une étanchéité dynamique sur l'arbre 8 du pignon 3.

En se référant aussi à la figure 2, la partie tubulaire 2b du carter 2 est percée, vers son extrémité extérieure, de deux fentes 13a et 13b, diamétralement opposées et situées dans un même plan perpendiculaire à l'axe A. Une pièce 14 de forme initialement circulaire, notamment en acier, est mise en place autour de la partie tubulaire 2b, puis déformée par resserrement de deux zones diamètralement opposées 14a et 14b, et introduction de ces zones 14a et 14b au travers des deux fentes respectives 13a et 13b, de telle sorte qu'elles s'engagent à l'intérieur de la partie tubulaire 2b, devant l'armature métallique 11.

Ainsi, la pièce 14 déformée va arrêter axialement l'ensemble composé de l'armature métallique 11 et de la bague 12, et l'armature 11 va elle-même maintenir en place le roulement 10, tandis que la bague 12 assurera l'étanchéité sur la partie tubulaire 2b du carter 2 et sur l'arbre 8 du pignon 3.

L'on ne s'éloignerait pas du cadre de l'invention, telle que définie dans les revendications annexées :
- en donnant toutes formes de détail à la bague d'étanchéité et à son armature de support, et en réalisant ces éléments en toutes matières appropriées ;
- en multipliant le nombre des ajours ménagés dans la partie tubulaire du carter, ainsi que le nombre correspondant des zones resserrées de la pièce déformable ;
- en adaptant le même dispositif de montage à tout type de carter, en métal ou alliage, tel que tôle d'acier ou aluminium, ou en matière synthétique, ou encore en matériau composite, la partie tubulaire concernée du carter pouvant être obtenue par un tube étiré soudé, ou par déformation à froid, en particulier par extrusion ;
- en destinant ce dispositif à toutes directions à crémaillère, qu'il s'agisse de directions manuelles ou de directions assistées.

## Revendications

1. Dispositif de montage de la ligne pignon dans un carter de direction à crémaillère de véhicule automobile, la ligne pignon comprenant une partie tubulaire (2b) de carter (2) entourant coaxialement l'ensemble constitué par le pignon de direction (3) et par son arbre (8), ainsi qu'un palier d'extrémité (9) et un roulement (10) pour le montage tournant de cet ensemble, un organe d'étanchéité (11,12) étant placé vers la sortie de l'arbre (8) du pignon (3), **caractérisé en ce que** l'organe d'étanchéité est constitué par une armature rigide (11) supportant une bague (12) élastiquement déformable, et **en ce qu'**une pièce (14) déformable de façon permanente est mise en place sur la partie tubulaire (2b) du carter (2), cette pièce (14) étant déformée vers l'intérieur de ladite partie tubulaire (2) pour arrêter axialement l'armature (11) de l'organe d'étanchéité, laquelle armature (11) maintiendra elle-même en place le roulement (10).

2. Dispositif de montage selon la revendication 1, **caractérisé en ce que** l'armature de l'organe d'étanchéité est constituée par une pièce rigide (11) en forme générale de manchon, tandis que la bague (12) élastiquement déformable, supportée par l'armature (11), est liée par surmoulage à cette armature (11).

3. Dispositif de montage selon la revendication 1 ou 2, **caractérisé en ce que** la bague (12) élastiquement déformable comporte, extérieurement, une partie annulaire massive (12a) assurant une étanchéité statique sur la paroi interne de la partie tubulaire (2a) et, intérieurement, au moins une lèvre annulaire (12b, 12c) coopérant avec l'arbre (8) du pignon (3) pour assurer une étanchéité dynamique.

4. Dispositif de montage selon l'une quelconque des revendications 1 à 3, **caractérisé en ce que** la pièce déformable de façon permanente est une pièce métallique (14) de forme initialement circulaire, mise en place autour de ladite partie tubulaire (2b) puis resserrée, dans au moins deux zones (14a,14b), au travers d'ajours correspondants (13a, 13b) ménagés dans cette partie tubulaire (2b), de manière à s'engager à l'intérieur de la partie tubulaire (2b) du carter (2), et à former ainsi des moyens d'arrêt coopérant avec l'armature (11) de l'organe d'étanchéité.

5. Dispositif de montage selon la revendication 4, **caractérisé en ce que** la pièce déformable (14), initialement circulaire, est déformée par resserrement de deux zones diamétralement opposées (14a, 14b), engagées respectivement au travers de deux ajours en forme de fentes ou de trous oblongs (13a,13b), diamétralement opposés, ménagés dans la partie tubulaire (2b) du carter (2).

## Claims

1. Device for mounting the pinion line in a motor vehicle rack and pinion steering casing, the pinion line comprising a tubular part (2b) of the casing (2) coaxially surrounding the assembly consisting of the steering pinion (3) and its shaft (8), as well as an end bearing (9) and a roller bearing (10) for the rotary mounting of this assembly, a sealing member (11, 12) being placed towards the output of the shaft (8) of the pinion (3), **characterised in that** the sealing member consists of a rigid frame (11) supporting an elastically deformable ring (12), and **in that** a permanently deformable piece (14) is placed on the tubular part (2b) of the casing (2), this piece (14) being deformed towards the inside of the said tubular part (2) in order to axially stop the frame (11) of the sealing member, which frame (11) will itself hold the roller bearing (10) in place.

2. Mounting device according to claim 1, **characterised in that** the frame of the sealing member consists of a rigid piece (11) in the general form of a sleeve, while the elastically deformable ring (12), supported by the frame (11), is connected by insert moulding to this frame (11).

3. Mounting device according to claim 1 or 2, **characterised in that** the elastically deformable ring (12) comprises, externally, a solid annular part (12a) providing a static seal on the internal wall of the tubular part (2a) and, internally, at least one annular lip (12b, 12c) cooperating with the shaft (8) of the pinion (3) in order to provide a dynamic seal.

4. Mounting device according to any one of claims 1 to 3, **characterised in that** the permanently deformable piece is a metal piece (14) of initially circular shape, fitted around the said tubular part (2b) and then clamped, in at least two zones (14a, 14b), through corresponding apertures (13a, 13b) provided in this tubular part (2b), so as to engage inside the tubular part (2b) of the casing (2), and thus to form stop means cooperating with the frame (11) of the sealing member.

5. Mounting device according to claim 4, **characterised in that** the deformable piece (14), initially circular, is deformed by clamping of two diametrically opposite zones (14a, 14b), engaged respectively through two apertures in the form of slots or oblong holes (13a, 13b), diametrically opposite, provided in the tubular part (2b) of the casing (2).

## Patentansprüche

1. Einbauvorrichtung für den Ritzelstrang in ein Zahnstangenlenkungsgehäuse eines Kraftfahrzeugs, wobei der Ritzelstrang ein rohrförmiges Teil (2b) des Gehäuses (2), welches die aus dem Lenkungsritzel (3) und seiner Welle (8) bestehende Einheit umschließt, sowie ein Endlager (9) und ein Wälzlager (10) für den drehenden Einbau dieser Einheit umfasst, wobei ein Dichtungsteil (11, 12) zum Ausgang der Welle (8) des Ritzels (3) hin eingesetzt ist, **dadurch gekennzeichnet, dass** das Dichtungsteil aus einer starren Verstärkung (11) besteht, die einen elastisch verformbaren Ring (12) hält, und dass ein dauerhaft verformbares Teil (14) am rohrförmigen Teil (2b) des Gehäuses (2) angebracht ist, wobei dieses Teil (14) zum Inneren des rohrförmigen Teils (2b) hin verformt ist, um die Verstärkung (11) des Dichtungsteils axial festzuhalten, wobei die Verstärkung (11) selbst das Wälzlager (10) an Ort und Stelle hält.

2. Einbauvorrichtung nach Anspruch 1, **dadurch gekennzeichnet, dass** die Verstärkung des Dichtungsteils aus einem starren, allgemein hülsenförmigen Teil (11) besteht, während der elastisch verformbare, von der Verstärkung (11) gehaltene Ring (12) durch Überformung mit dieser Verstärkung (11) verbunden ist.

3. Einbauvorrichtung nach Anspruch 1 oder 2, **dadurch gekennzeichnet, dass** der elastisch verformbare Ring (12) außen ein ringförmiges massives Teil (12a), das eine statische Dichtigkeit an der Innenwand des rohrförmigen Teils (2b) sicherstellt, und im Inneren mindestens eine ringförmige Lippe (12b, 12c) umfasst, die mit der Welle (8) des Ritzels (3) zusammenwirkt, um eine dynamische Dichtigkeit sicherzustellen.

4. Einbauvorrichtung nach einem der Ansprüche 1 bis 3, **dadurch gekennzeichnet, dass** das dauerhaft verformbare Teil ein ursprünglich kreisförmiges Metallteil (14) ist, das um das rohrförmige Teil (2b) angebracht und dann in mindestens zwei Bereichen (14a, 14b) durch entsprechende Ausschnitte (13a, 13b) hindurch, die in diesem rohrförmigen Teil (2b) ausgebildet sind, so zusammengequetscht wird, dass es in das Innere des rohrförmigen Teils (2b) des Gehäuses (2) eingreift und somit Feststelleinrichtungen bildet, die mit der Verstärkung (11) des Dichtungsteils zusammenwirken.

5. Einbauvorrichtung nach Anspruch 4, **dadurch gekennzeichnet, dass** das ursprünglich kreisförmige, verformbare Teil (14) durch Zusammenquetschen zweier diametral entgegengesetzter Bereiche (14a, 14b) verformt wird, die jeweils in zwei diametral entgegengesetzte Ausschnitte in Form von Schlitzen oder Langlöchern (13a, 13b) eingreifen, die im rohrförmigen Teil (2b) des Gehäuses (2) ausgebildet sind.
